# EUROPEAN PATENT SPECIFICATION

(11) **EP 2 955 910 B1**
(45) Date of publication and mention of the grant of the patent: **03.06.2020**
(21) Application number: 15167867.9
(22) Date of filing: 15.05.2015
(51) Int. Cl.: H04N 5/225, H04N 5/232

(54) **CAMERA MODULE AND VEHICLE COMPONENT INCLUDING THE SAME**
KAMERAMODUL UND FAHRZEUGKOMPONENTE DAMIT
MODULE DE CAMÉRA ET COMPOSANT DE VÉHICULE COMPRENANT CELUI-CI

(30) Priority: 09.06.2014 KR 20140069128
(43) Date of publication of application: 16.12.2015
(73) Proprietor: LG Innotek Co., Ltd., Seoul, 04637 (KR)
(72) Inventor: Yeo, Jae Young, Seoul 100-714 (KR)
(74) Representative: DREISS Patentanwälte PartG mbB

(56) References cited:
- EP-A2- 1 942 661
- WO-A1-2012/061567
- US-A1- 2011 025 850
- US-A1- 2014 148 030

## Description

### TECHNICAL FIELD

Embodiments relate to a camera module and a vehicle component including the same.

### BACKGROUND

A camera module is a sort of an image capture device that captures an image and converts the captured image into an electrical signal. The camera module may be applied to various fields including, for example, vehicles or crime prevention. In one example, the camera module may be used to capture an image of the periphery of a vehicle to assist safe traveling of a driver.

When the camera module undergoes electrostatic discharge (ESD), a Printed Circuit Board (PCB) incorporated in the module is affected by the ESD, which may cause various Integrated Circuits (ICs) mounted on the PCB to malfunction due to noise. When the ICs malfunction, the camera module may suffer from deterioration in resolution or operational errors such as, for example, screen darkening or screen overlap, which makes it impossible for the camera module to correctly function. US 2011/025850 A1 and US 2014/148030 A1 disclose camera modules with features of the preamble of claim 1.

### SUMMARY

Accordingly, the invention as claimed in claims 1, 6 and 10 provides, respectively, a camera module, a vehicle camera module and a vehicle component including the same to solve problems of the related art.

Embodiments provide a camera module having a circuit board that is not affected by electrostatic discharge and a vehicle component including the same.

In one embodiment, a camera module includes a housing and a circuit board accommodated in the housing, the circuit board being connectable to a connector including a metal, wherein the circuit board includes a ground portion and a connection portion located to be electrically insulated from the ground portion, the connection portion being connectable to the connector.

The ground portion may be a body of the circuit board or a portion of the body.

The metal may correspond to a support member configured to maintain a shape of the connector. The connector may include a flexible material.

The ground portion and the connection portion may be disconnected from each other. The circuit board may further include an electrically insulating member disposed between the ground portion and the connection portion.

The connection portion may include a power input terminal connected to the connector to supply power to the circuit board. The connection portion may include a signal input and output terminal connected to the connector to supply a signal to the circuit board or to receive a signal from the circuit board.

The circuit board may include at least one functional element, and the at least one functional element may be connected to the ground portion of the circuit board.

The camera module may further include a lens, and the at least one functional element may include at least one of an image sensor configured to convert an optical image from the lens into an electrical image signal, an oscillator configured to generate a clock signal required for the image sensor, a video amplifier configured to amplify the image signal and output the amplified image signal as a video signal, a converter configured to convert a level of input power to a level of power required for the circuit board, or a controller configured to control at least one of the image sensor or the converter. The converter may include at least one of a direct current (DC)-DC converter or a low voltage drop out regulator. The at least one functional element may further include a storage unit configured to temporarily store the electrical image signal generated in the image sensor. The storage unit may include a flash memory.

The connection portion may receive the input power to provide the converter with the received input power.

In another embodiment, a vehicle camera module includes a housing and a circuit board accommodated in the housing, the circuit board being connectable to a connector, the connector including a metal and being configured to receive power through a first cable from a battery, wherein the circuit board includes a ground portion and a connection portion disposed to be electrically insulated from the ground portion, the connection portion being connectable to the connector. The first cable may have a length of 10 cm or 15 cm or more.

The connector may transmit a surrounding image generated in the vehicle camera module to an electronic control unit (ECU) through a second cable, the ECU being included in a vehicle to analyze the surrounding image of the vehicle. The second cable may have a length of 10 cm or 15 cm or more. The surrounding image of the vehicle may include an image of at least one of the front side or the rear side of the vehicle.

In a further embodiment, a vehicle component includes the vehicle camera module.

### BRIEF DESCRIPTION OF THE DRAWINGS

Arrangements and embodiments may be described in detail with reference to the following drawings in which like reference numerals refer to like elements and wherein:
FIG. 1 is a view illustrating a camera module according to an embodiment;
FIG. 2 is a block diagram illustrating one embodiment of a circuit board illustrated in FIG. 1;
FIGs. 3A and 3B are respectively an exploded perspective view and an assembled perspective view illustrating a housing, a circuit board, and a lens according to an embodiment;
FIG. 4 is a partially cut-away perspective view illustrating a vehicle equipped with the camera module according to an embodiment;
FIG. 5 is a plan view illustrating a circuit board according to an embodiment;
FIGs. 6(a) and 6(b) are views illustrating a state in which a circuit board is under the influence of electrostatic discharge according to a comparative embodiment and an embodiment; and
FIG. 7 is a graph illustrating the influence of impedance depending on electrostatic discharge in a camera module according to a comparative embodiment and an embodiment.

### DESCRIPTION OF SPECIFIC EMBODIMENTS

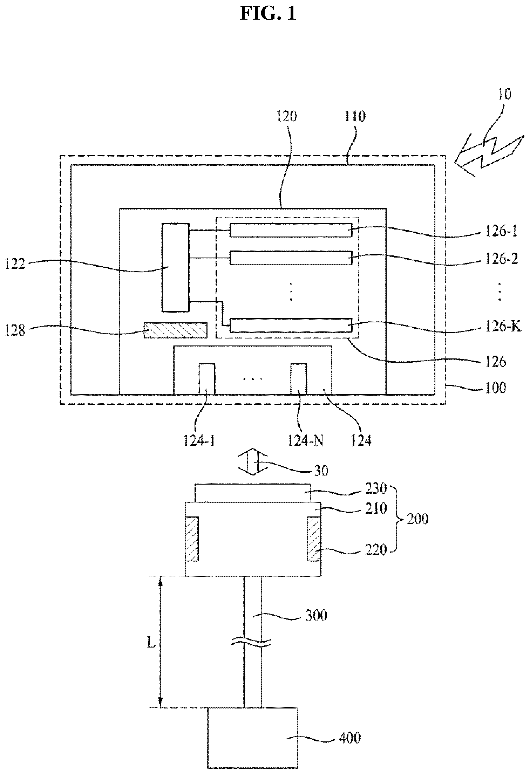

FIG. 1 is a view illustrating a camera module 100 according to an embodiment.

The camera module 100 illustrated in FIG. 1 may include a housing (or case) 110 and a circuit board 120.

The housing 110 may serve to accommodate the circuit board 120 therein. That is, the housing 110 may serve as a protective shield to protect internal components of the camera module 100, for example, the circuit board 120 from, for example, outside dust or moisture.

The housing 110 may be formed of, for example, plastic, polypropylene (PP), polyethylene (PE), or polycarbonate (PC) and may be wholly or partially formed of a metal. Here, polycarbonate has excellent light resistance and heat resistance as well as high strength. While the housing 110 may be formed via blow molding, the embodiment is not limited as to the material or external shape of the housing 110.

A connector 200 may be electrically connected to the circuit board 120 received in the housing 110.

The connector 200 may include a frame 210, a metal 220, and a protrusion 230.

The metal 220 may be affixed to the exterior of the frame 210. For example, the metal 220 may serve as a support member. When the connector 200 is formed of a flexible material, the support member 220 may serve to maintain the shape of the frame 210 in an original state so as to prevent deformation of the connector 200. To this end, in the case of FIG. 1, a pair of metals 220 serving as support members may be attached to both sides of the frame 210. However, the embodiment is not limited to this attachment form of the metal 220.

The protrusion 230 may be shaped to protrude from the frame 210 to provide the connector 200 with a shape suitable for coupling to or separation from a connection element 124 of the circuit board 120 in a direction designated by the arrow 30.

The circuit board 120 may include a ground portion 122 and the connection portion 124. Here, the circuit board 120 may mean a Printed Circuit Board (PCB).

The ground portion 122 is illustrated in a conceptual block in FIG. 1, and may be a body itself of the circuit board 120 or a portion of the body rather than being separately present.

The connection portion 124 may be shaped to be connectable to the connector 200. For example, when the connector 200 includes the protrusion 230 as described above, the connection portion 124 may be shaped to allow the protrusion 230 to be introduced into the connection portion 124.

In addition, the connection portion 124 may include N terminals 124-1, ..., 124-N to perform various functions. Here, N is a positive integer greater than or equal to 1. For example, while the N terminals 124-1 to 124-N have take the form of pins to be connectable to the connector 200, the embodiment is not limited to these shapes of the N terminals 124-1 to 124-N.

For example, the N terminals 124-1 to 124-N may include at least one of a power input terminal or a signal input/output terminal.

The power input terminal may be connected to the connector 200 and serve to receive power required for the circuit board 120. The signal input/output terminal may be connected to the connector 200 and serve to receive a signal transmitted to the circuit board 120 or to transmit a signal from the circuit board 120.

As described above, the connection portion 124 may serve as an interface between the connector 200 and the circuit board 120.

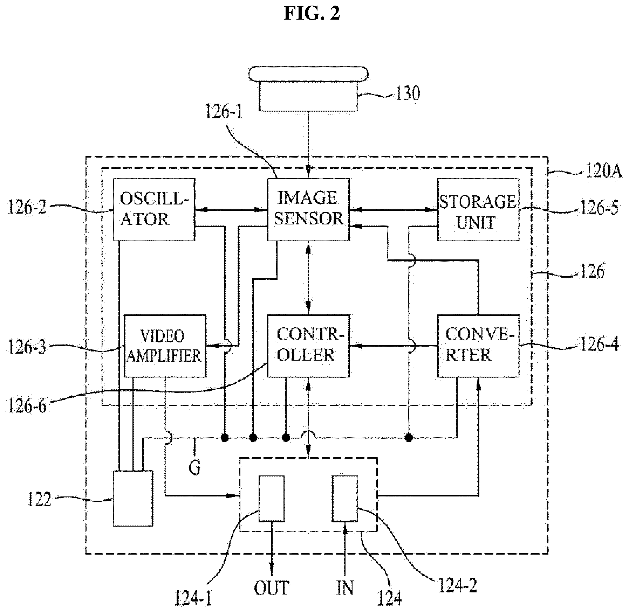

In addition, the circuit board 120 may include at least one functional element (or an Integrated Circuit (IC)). The at least one functional element may include first to K^{th} functional elements 126-1, 126-2, ..., 126-K. Here, K is a positive integer greater than or equal to 1. The first to K^{th} functional elements 126-1, 126-2, ..., 126-K may be connected to the ground portion 122 of the circuit board 120. When the ground portion 122 is a body itself of the circuit board 120 as described above rather than being a separate member, the first to K^{th} functional elements 126-1, 126-2, ..., 126-K may be in electrical conduction with the circuit board 120. Examples of each of the first to K^{th} functional elements 126-1, 126-2, ..., 126-K will be described later in more detail with reference to FIG. 2.

Meanwhile, an external device 400 may be connected to the connector 200 through a cable 300 and may function not only to supply a signal or power required for the circuit board 120, but also to analyze and process a signal generated or processed in the circuit board 120.

For example, the external device 400 may be a power supply. In this case, the connector 200 may transmit power, supplied from the power supply unit 400 through the cable 300, to the power input terminal of the connection portion 124 of the circuit board 120. Alternatively, the external device 400 may be an image signal analyzer. In this case, the connector 200 may receive an image signal from the circuit board 120 and transmit the image signal to the image signal analyzer 400 through the cable 300. The image signal analyzer 400 may analyze an image signal provided from the circuit board 120 of the camera module 100.

The embodiment is not limited to the above-described examples of the external device 400, and the external device 400 may perform various other functions. To this end, the camera module 100 may be connected to the external device 400 through the connector 200 and the cable 300.

Meanwhile, in some embodiments, the connection portion 124 of the circuit board 120 may be disposed to be electrically insulated from the ground portion 122. That is, the connection portion 124 and the ground portion 122 may be electrically floated.

For example, the ground portion 122 and the connection portion 124 may be disconnected from each other, or electrically disconnected.

Alternatively, the circuit board 120 may further include an electrically insulating member 128.

The electrically insulating member 128 may be located between the ground portion 122 and the connection portion 124 to electrically insulate the ground portion 122 and the connection portion 124.

Since the camera module 100 in accordance with the embodiment includes the housing 110, electrostatic discharge (ESD) 10 applied from the exterior to the camera module 100 may first reach the housing 110. At this time, when the connector 200 is connected to the camera module 100, the electrostatic discharge 10 may be introduced into the connection portion 124 of the camera module 100 through the metal 220 of the connector 200.

In such a state, when the connection portion 124 is electrically connected to the ground portion 122 differently from the illustration of FIG. 1, the electrostatic discharge 10 introduced into the connection portion 124 may be transmitted to the circuit board 120. Transmission of the electrostatic discharge 10 to the circuit board 120 may cause malfunction of the various functional elements 126-1, 126-2, ..., 126-K included in the circuit board 120.

However, in the circuit board 120 of the camera module 100 in accordance with the embodiment, as described above, the connection portion 124 is electrically insulated from the ground portion 122. Thus, the electrostatic discharge 10, introduced into the connection portion 124 by way of the metal 220 of the connector 200 from the housing 110, is not transmitted to the ground portion 122 and, consequently, the circuit board 120 may be protected from the electrostatic discharge 10.

In addition, referring to FIG. 1, as described above, the connector 200 and the external device 400 may be connected to each other through the cable 300.

In general, current flows well under a lower resistance. Thus, when a length L of the cable 300 connected between the connector 200 and the external device 400 is short, the electrostatic discharge 10 introduced into the camera module 100 may be dissipated through the cable 300. In this case, the electrostatic discharge 10 may not be transmitted to the ground portion 122 through the connection portion 124 even if the connection portion 124 and the ground portion 122 are not electrically insulated from each other differently from the illustration of FIG. 1. However, when the length L of the cable 300 is excessively long, for example, 10 cm or more or 15 cm or more, the electrostatic discharge 10 may not be dissipated through the cable 300.

As described above, in a state in which an external environment affecting the connector 200 (e.g., the length of the cable 300) is not suitable to dissipate the electrostatic discharge 10, the electrostatic discharge 10 introduced through the housing 110 may be blocked, rather than being introduced into the circuit board 120 through the connection portion 124 and the metal 220 of the connector 200, because the connection portion 124 is electrically insulated rather than being connected to the ground portion 122 of the circuit board 120 as illustrated in FIG. 1.

Meanwhile, in the camera module 100 illustrated in FIG. 1, one embodiment 120A of the circuit board 120 will be described below with reference to the accompanying drawing.

FIG. 2 is a block diagram illustrating one embodiment 120A of the circuit board 120 illustrated in FIG. 1.

Referring to FIG. 2, the camera module 100 may further include a lens 130. Here, the ground portion 122 may be a body itself of the circuit board 120A rather than being a separate member as described above. In addition, wires G connected between the ground portion 122 and the respective elements 126-1, 126-2, 126-3, 126-4, 126-5, and 126-6 are virtual electric wires representing that the ground portion 122 is in electrical conduction with the respective elements 126-1 to 126-6. Here, it can be appreciated that the ground portion 122 is not in electrical conduction with the connection portion 124 because the connection portion 124 is electrically insulated from the ground portion 122.

The circuit board 120A illustrated in FIG. 2 may include an image sensor 126-1, an oscillator 126-2, a video amplifier 126-3, a converter 126-4, a storage unit 126-5, and a controller 126-6. Each of the elements 126-1 to 126-6 illustrated in FIG. 2 may correspond to at least one functional element 126 illustrated in FIG. 1. Thus, FIG. 2 represents the case in which K=6.

First, the lens 130 focuses an image of a target object to be photographed on the image sensor 126-1.

The image sensor 126-1 may convert an optical image from the lens 130 into an electrical image signal in response to a clock signal and output the converted electrical image signal to the video amplifier 126-3.

The oscillator 126-2 may generate a clock signal and output the generated clock signal to the image sensor 126-1.

The video amplifier 126-3 may amplify the electrical image signal received from the image sensor 126-1 and output the amplified result as a video signal through a signal input/output terminal 124-1 (OUT) of the connection portion 124.

The converter 126-4 may convert a level of power received from the external device 400 through a power input terminal 124-2 (IN) of the connection portion 124 into a level of power required for the circuit board 120A and output the converted level of power to the respective elements 126-1 to 126-6. To this end, for example, the converter 126-4 may include at least one of a DC-DC converter (not illustrated) or a Low voltage Drop Out (LDO) regulator (not illustrated).

In addition, the storage unit 126-5 may be connected to the image sensor 126-1 and serve to temporarily store the electrical image signal generated in the image sensor 126-1. To this end, the storage unit 126-5 may be implemented as a flash memory.

The controller 126-6 may control at least one of the image sensor 126-1 or the converter 126-4.

As exemplarily illustrated in FIG. 2, since the connection portion 124 and the ground portion 122 are electrically insulated from each other, the respective elements 126-1 to 126-6 may be protected from the electrostatic discharge 10 even if the electrostatic discharge 10 is introduced into the connection portion 124 through the housing 110 and the metal 220 of the connector 200.

The circuit board 120A of the camera module 100 illustrated in FIG. 2 is merely one example for description of the respective elements 126-1 to 126-6 of the circuit board 120A which are protected from the electrostatic discharge 10 and the embodiment is not limited thereto. Thus, even if the circuit board 120A of the camera module 100 in accordance with the embodiment includes any kinds of functional elements, the embodiment may be applied thereto.

Hereinafter, an external appearance of the camera module 100 illustrated in FIGs. 1 and 2 in accordance with the embodiments will be described with reference to the accompanying drawings.

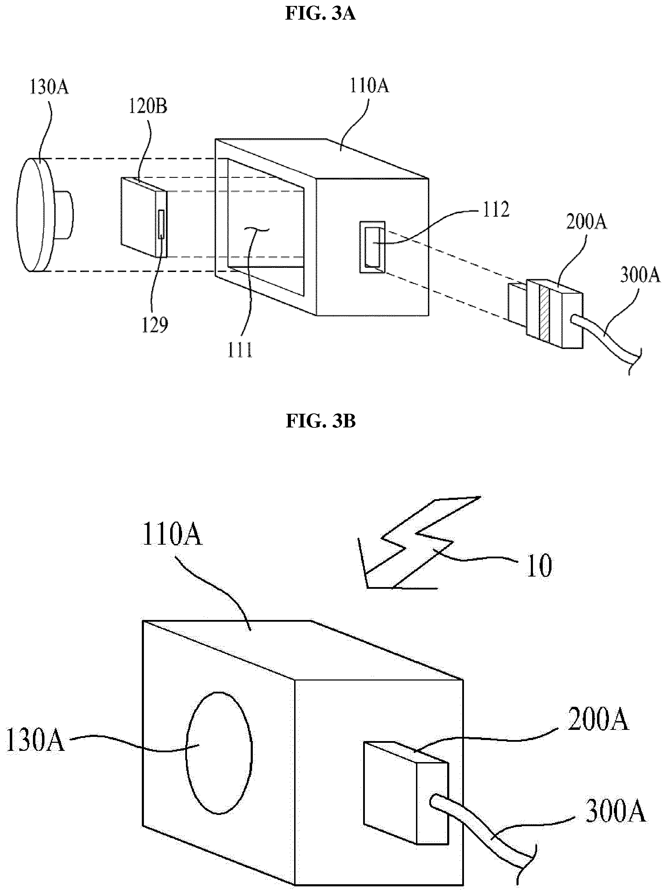

FIGs. 3A and 3B are respectively an exploded perspective view and an assembled perspective view illustrating a housing 110A, a circuit board 120B, and a lens 130A according to an embodiment.

Referring to FIGs. 3A and 3B, the housing 110A and the circuit board 120B may correspond to one embodiment of each of the housing 110 and the circuit board 120 illustrated in FIG. 1, and the lens 130A may correspond to one embodiment of the lens 130 illustrated in FIG. 2.

Although the housing 110A is illustrated as having a hexahedral outer shape, the embodiment is not limited to this external shape of the housing 110A. The housing 110A may have first and second openings 111 and 112. The first opening 111 may correspond to an opening through which the circuit board 120B is introduced for reception in the housing 110A. The second opening 112 may correspond to an opening through which the protrusion 230 of the connector 200 passes for coupling with a connection socket 129 of the connection portion 124 of the circuit board 120B. However, the connector 200 may of course be coupled to the circuit board 120B in a manner different from the illustration of FIGs. 3A and 3B.

Referring to FIG. 3B, after the circuit board 120B and the lens 130A are accommodated in the housing 110A, the connector 200 connected to the external device 400 through the cable 300A may be connected to the connection portion 124 of the circuit board 120B through the second opening 112. In such a state, even if the electrostatic discharge 10 is introduced into the housing 110A, the various functional elements 126-1 to 126-K, which are included in the circuit board 120B so as to be in electrical conduction with one another, may be protected from the electrostatic discharge 10 because the connection portion 124 is electrically insulated from the ground portion 122 as described above. Typically, almost all ICs mounted on the circuit board 120 may be affected by the electrostatic discharge 10.

FIGs. 3A and 3B are provided by way of example for better understanding of the camera module 100 according to the embodiment and the embodiment is not limited thereto. That is, the circuit board 120 of the camera module 100 according to the embodiment may be protected from the electrostatic discharge 10 regardless of the shapes of and coupling structures between the housing 110, the circuit board 120, and the lens 130 of the camera module 100.

Meanwhile, an application example of the camera module 100 according to the above-described embodiment will be described below with reference to the accompanying drawings. Although the case in which the above-described camera module 100 is applied to a vehicle 500 will be described below by way of example, the embodiment is not limited thereto. That is, the following description may be applied even when the camera module 100 according to the embodiment is applied to other uses, for example, a monitoring camera.

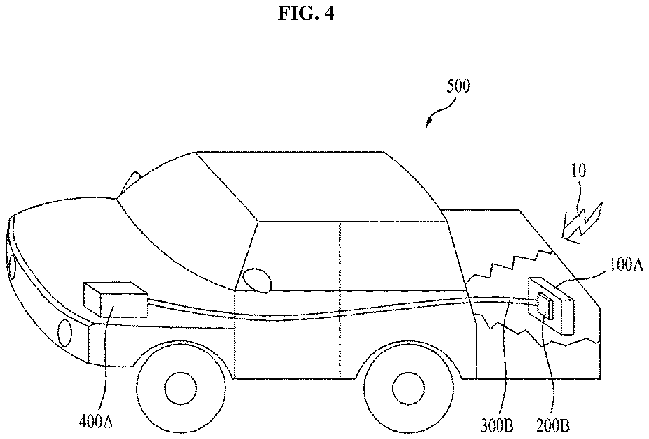

FIG. 4 is a partially cut-away perspective view illustrating the vehicle 500 equipped with the camera module 100 according to an embodiment.

Referring to FIG. 4, the vehicle 500 may include a camera module 100A, a connector 200B, a cable 300B, and an external device 400A. Here, the camera module 100A, the connector 200B, the cable 300B, and the external device 400A may respectively correspond to the embodiment of each of the camera module 100, the connector 200, the cable 300, and the external device 400 illustrated in FIG. 1.

According to one embodiment, the external device 400A may include a battery that supplies power to respective components of the vehicle 500. Power may be supplied from the battery 400A to the camera module 100A through the cable 300B and the connector 200B. The connector 200B may be connected to the circuit board 120 within the camera module 100A as exemplarily illustrated in FIG. 1.

According to another embodiment, the external device 400A may include an Electronic Control Unit (ECU) that analyzes a surrounding image of the vehicle 500. Generally, a vehicle has any one of various ECUs. The ECU may be a sort of a computer containing software that is capable of executing various functions for a vehicle. Thus, the ECU included in the external device 400A may be a computer that analyzes a surrounding image of the vehicle 500. In this case, the connector 200B may transmit a surrounding image generated in the camera module 100A to the ECU 400A through the cable 300B.

As described above, the electrostatic discharge 10 may be dissipated through the cable 300B when the length of the cable 300B is sufficiently short. The camera module 100A according to the embodiment may protect the circuit board 120 of the camera module 100A from the electrostatic discharge 10 when the length of the cable 300B is long, for example, 10 cm or more or 15 cm or more.

In addition, when the external device 400A includes both the battery and the ECM, as exemplarily illustrated in FIG. 4, the camera module 100A may serve as a rear monitoring camera of the vehicle 500, without being limited thereto. According to another embodiment, the camera module 100A may serve as a front surveillance camera differently from the illustration of FIG. 4.

Hereinafter, one embodiment 120C of the circuit boards 120, 120A and 120B included in the camera modules 100 and 100A according to the above-described embodiments and the influence of the electrostatic discharge 10 on the circuit board 120C will be described below with reference to the accompanying drawings.

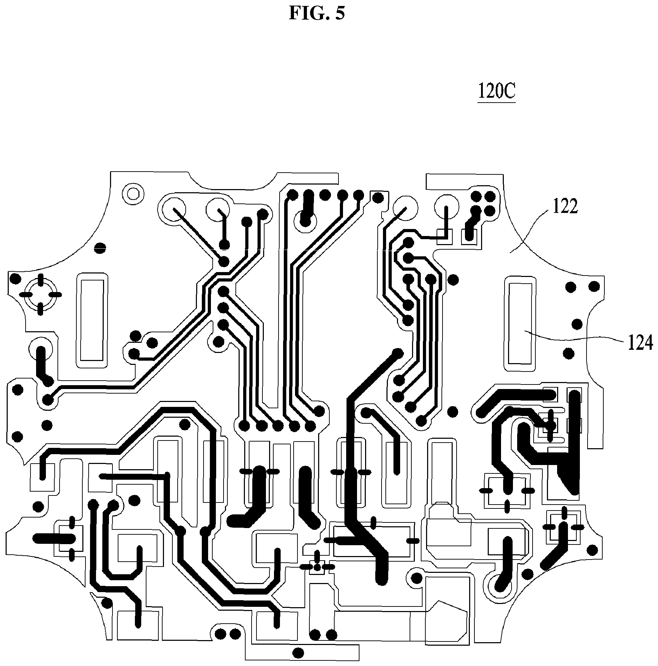

FIG. 5 is a plan view illustrating the circuit board 120C according to an embodiment.

The circuit board 120C illustrated in FIG. 5 may include the ground portion 122 and the connection portion 124. Here, the ground portion 122 may be a body itself of the circuit board 120C. According to the embodiment, it can be appreciated that the ground portion 122 is electrically floated from the connection portion 124.

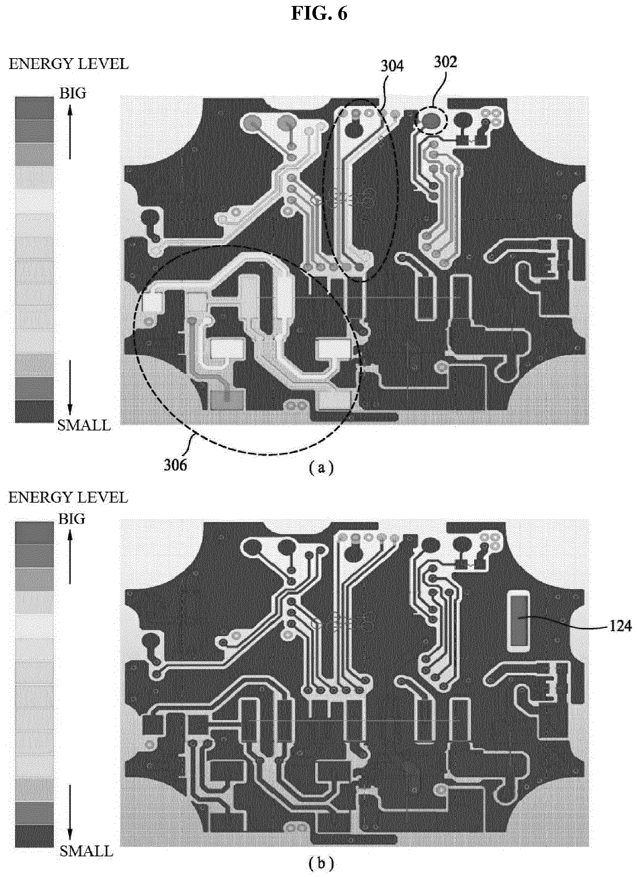

FIGs. 6(a) and 6(b) respectively illustrate a state in which circuit boards according to a comparative embodiment and an embodiment are affected by electrostatic discharge 10. Here, it can be appreciated that the greater the strength of noise caused by electrostatic discharge, the greater the level of energy.

Referring to FIG. 6(a), in the case of the circuit board according to the comparative embodiment, it can be appreciated that respective regions 302, 304 and 306 of the circuit board 120 are greatly affected by noise due to electrostatic discharge introduced into the camera module from the exterior.

On the other hand, referring to FIG. 6(b), in the case of the circuit board according to the embodiment, it can be appreciated that, even if electrostatic discharge 10 is introduced into the camera module 100, only the connection portion 124 is affected by the electrostatic discharge and the remaining region of the circuit board is not completely affected.

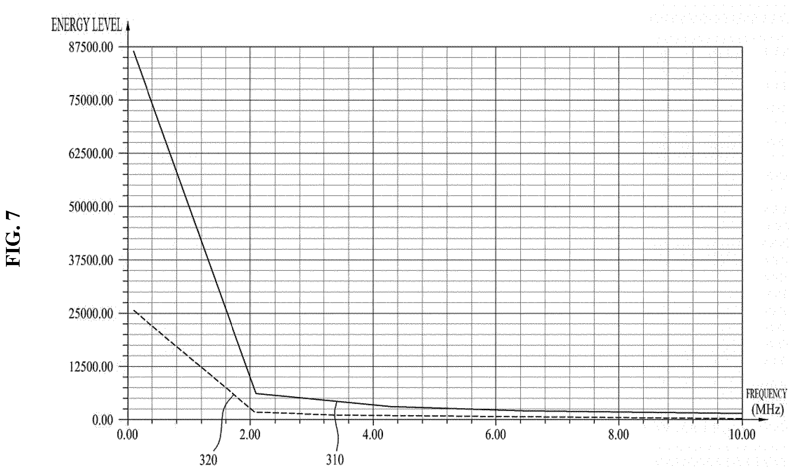

FIG. 7 is a graph illustrating the influence of impedance depending on electrostatic discharge in camera modules according to a comparative embodiment 310 and an embodiment 320. The horizontal axis represents frequency and the vertical axis represents the energy level of electrostatic discharge measured in a line of the circuit board.

Referring to FIG. 7, it can be appreciated that the energy level of electrostatic discharge is very high in the case of the comparative embodiment 310 in which a connection portion and a ground portion of a circuit board are connected to each other in the camera module.

On the other hand, in the case of the embodiment 320, it can be appreciated that the connection portion 124 and the ground portion 122 of the circuit board are electrically floated and the energy level of electrostatic discharge is much lower than that of the comparative embodiment 310.

In addition, the camera module of the embodiment may be a vehicle camera module and may be mounted to a vehicle. That is, the vehicle or vehicle component may include the embodiment.

As is apparent from the above description, in a camera module and a vehicle component including the same according to the embodiments, owing to the fact that a connection portion and a ground portion of a circuit board are electrically floated from each other, even if electrostatic discharge is applied to a housing of the camera module, various functional elements of the circuit board are not affected by noise of the electrostatic discharge. As a result, the camera module and the vehicle component including the same may achieve a reduced defect rate as well as increased lifespan and may also sincerely perform a correct function without being affected by variation of a surrounding environment such as electrostatic discharge.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A camera module (100, 100A), comprising:
a housing (110, 110A); and
a circuit board (120, 120A, 120B, 120C) accommodated in the housing (110, 110A), the circuit board (120, 120A, 120B, 120C) being connectable to a connector (200, 200B) including a frame (210) and a metal (220), the metal being affixed to an exterior of the frame for maintaining a shape of the frame so as to prevent deformation of the connector,
**characterized in that** the circuit board (120, 120A, 120B, 120C) includes:
a ground portion (122) ;
a connection portion (124) located to be electrically insulated from the ground portion (122), the connection portion (124) being connectable to the connector (200, 200B) and shaped to be connected to the connector (200, 200B); and
an electrically insulating member (128) disposed between the ground portion (122) and the connection portion (124) to electrically insulate the ground portion (122) and the connection portion (124), such that an electrostatic discharge (10), introduced into the connection portion (124) by way of the metal (220) of the connector (200) from the housing (110) is not transmitted to the ground portion (122),
wherein the circuit board (120) includes at least one functional element (126), and the at least one functional element (126) is connected to the ground portion (122) of the circuit board (120),
wherein the connection portion (124) includes a power input terminal (124-2) connected to the connector (200) to supply power to the circuit board (120), and
wherein the connection portion (124) includes a signal input and output terminal (124-1) connected to the connector (200) to supply a signal to the circuit board (120) or to receive a signal from the circuit board (120).

2. The camera module (100, 100A) according to claim 1, wherein the connector (200) includes a flexible material.

3. The camera module (100, 100A) according to any one of claims 1 to 2, wherein the ground portion (122) and the connection portion are disconnected from each other.

4. The camera module (100, 100A) according to claim 1, further comprising a lens (130, 130A),
wherein the at least one functional element (126) includes at least one of:
an image sensor (126-1) configured to convert an optical image from the lens (130) into an electrical image signal;
an oscillator (126-2) configured to generate a clock signal required for the image sensor (126-1);
a video amplifier (126-3) configured to amplify the image signal and output the amplified image signal as a video signal;
a converter (126-4) configured to convert a level of input power to a level of power required for the circuit board (120); or
a controller (126-5) configured to control at least one of the image sensor (126-1) or the converter (126-4).

5. The camera module (100, 100A) according to claim 4, wherein the connection portion (124) receives the input power to provide the converter (126-4) with the received input power.

6. A vehicle camera module (100, 100A), comprising:
a housing (110, 110A); and
a circuit board (120, 120A, 120B, 120C) accommodated in the housing (110, 110A), the circuit board (120, 120A, 120B, 120C) being connectable to a connector (200, 200B), the connector (200, 200B) including a frame (210) and a metal and being configured to receive power through a first cable (300B) from a battery(400A),
**characterized in that** the circuit board (120, 120A, 120B, 120C) includes:
a ground portion (122); and
a connection portion (124) disposed to be electrically insulated from the ground portion (122), the connection portion (124) being connectable to the connector (200, 200B) and shaped to be connected to the connector (200, 200B); and
an electrically insulating member (128) disposed between the ground portion (122) and the connection portion (124) to electrically insulate the ground portion (122) and the connection portion (124), such that an electrostatic discharge (10), introduced into the connection portion (124) by way of the metal (220) of the connector (200) from the housing (110) is not transmitted to the ground portion (122),
wherein the circuit board (120) includes at least one functional element (126), and the at least one functional element (126) is connected to the ground portion (122) of the circuit board (120),
wherein the connection portion (124) includes a power input terminal (124-2) connected to the connector (200) to supply power to the circuit board (120), and,
wherein the metal is affixed to an exterior of the frame for maintaining a shape of the frame so as to prevent deformation of the connector.

7. The vehicle camera module (100, 100A) according to claim 6, wherein the first cable (300B) has a length of 10 cm or 15 cm or more.

8. The vehicle camera module (100, 100A) according to any one of claims 6 and 8, wherein the connector (200, 200B) transmits a surrounding image generated in the vehicle camera module (100, 100A) to an electronic control unit (ECU) through a second cable, the ECU being included in a vehicle (500) to analyze the surrounding image of the vehicle (500).

9. The vehicle camera module (100, 100A) according to claim 8, wherein the second cable has a length of 10 cm or 15 cm or more.

10. A vehicle component including the vehicle camera module (100, 100A) according to any one claims 6 to 9.

## Patentansprüche

1. Kameramodul (100, 100A), umfassend:
ein Gehäuse (110, 110A); und
eine Leiterplatte (120, 120A, 120B, 120C), die in dem Gehäuse (110, 110A) untergebracht ist, wobei die Leiterplatte (120, 120A, 120B, 120C) mit einem Verbinder (200, 200B) verbindbar ist, der einen Rahmen (210) und ein Metall (220) beinhaltet, wobei das Metall an einer Außenseite des Rahmens befestigt ist, um eine Form des Rahmens aufrechtzuerhalten, um eine Verformung des Verbinders zu verhindern,
**dadurch gekennzeichnet, dass** die Leiterplatte (120, 120A, 120B, 120C) beinhaltet:
einen Erdungsabschnitt (122);
einen Verbindungsabschnitt (124), der so angeordnet ist, dass er von dem Erdungsabschnitt (122) elektrisch isoliert ist, wobei der Verbindungsabschnitt (124) mit dem Verbinder (200, 200B) verbindbar und so geformt ist, dass er mit dem Verbinder (200, 200B) verbunden werden kann; und
ein elektrisch isolierendes Element (128), das zwischen dem Erdungsabschnitt (122) und dem Verbindungsabschnitt (124) angeordnet ist, um den Erdungsabschnitt (122) und den Verbindungsabschnitt (124) elektrisch zu isolieren, so dass eine elektrostatische Entladung (10), die über das Metall (220) des Verbinders (200) von dem Gehäuse (110) in den Verbindungsabschnitt (124) eingeleitet wird, nicht auf den Erdungsabschnitt (122) übertragen wird,
wobei die Leiterplatte (120) mindestens ein Funktionselement (126) beinhaltet und wobei das mindestens ein Funktionselement (126) mit dem Erdungsabschnitt (122) der Leiterplatte (120) verbunden ist,
wobei der Verbindungsabschnitt (124) einen Leistungseingangsanschluss (124-2) beinhaltet, der mit dem Verbinder (200) verbunden ist, um der Leiterplatte (120) Leistung zuzuführen, und
wobei der Verbindungsabschnitt (124) einen Signaleingangs- und -ausgangsanschluss (124-1) beinhaltet, der mit dem Verbinder (200) verbunden ist, um der Leiterplatte (120) ein Signal zuzuführen oder um ein Signal von der Leiterplatte (120) zu empfangen.

2. Kameramodul (100, 100A) nach Anspruch 1, wobei der Verbinder (200) ein flexibles Material enthält.

3. Kameramodul (100, 100A) nach einem der Ansprüche 1 bis 2, wobei der Erdungsabschnitt (122) und der Verbindungsabschnitt voneinander getrennt sind.

4. Kameramodul (100, 100A) nach Anspruch 1, ferner umfassend ein Objektiv (130, 130A), wobei das mindestens ein Funktionselement (126) mindestens eines der folgenden Elemente beinhaltet:
einen Bildsensor (126-1), der so konfiguriert ist, dass er ein optisches Bild vom Objektiv (130) in ein elektrisches Bildsignal umwandelt;
einen Oszillator (126-2), der so konfiguriert ist, dass er ein für den Bildsensor (126-1) erforderliches Taktsignal erzeugt;
einen Videoverstärker (126-3), der konfiguriert ist, um das Bildsignal zu verstärken und das verstärkte Bildsignal als Videosignal auszugeben;
einen Konverter (126-4), der konfiguriert ist, um einen Eingangsleistungspegel in einen für die Leiterplatte (120) erforderlichen Leistungspegel umzuwandeln; oder
eine Steuerung (126-5), die konfiguriert ist, um mindestens einen der Bildsensoren (126-1) oder den Konverter (126-4) zu steuern.

5. Kameramodul (100, 100A) nach Anspruch 4, wobei der Verbindungsabschnitt (124) die Eingangsleistung erhält, um den Konverter (126-4) mit der empfangenen Eingangsleistung zu versorgen.

6. Fahrzeugkameramodul (100, 100A), umfassend:
ein Gehäuse (110, 110A); und
eine Leiterplatte (120, 120A, 120B, 120C), die in dem Gehäuse (110, 110A) untergebracht ist,
wobei die Leiterplatte (120, 120A, 120B, 120C) mit einem Verbinder (200, 200B) verbindbar ist,
wobei der Verbinder (200, 200B) einen Rahmen (210) und ein Metall umfasst und konfiguriert ist, um Leistung durch ein erstes Kabel (300B) von einer Batterie (400A) zu empfangen,
**dadurch gekennzeichnet, dass** die Leiterplatte (120, 120A, 120B, 120C) Folgendes beinhaltet:
einen Erdungsabschnitt (122); und
einen Verbindungsabschnitt (124), der so angeordnet ist, dass er von dem Erdungsabschnitt (122) elektrisch isoliert ist, wobei der Verbindungsabschnitt (124) mit dem Verbinder (200, 200B) verbindbar und so geformt ist, dass er mit dem Verbinder (200, 200B) verbunden werden kann; und
ein elektrisch isolierendes Element (128), das zwischen dem Erdungsabschnitt (122) und dem Verbindungsabschnitt (124) angeordnet ist, um den Erdungsabschnitt (122) und den Verbindungsabschnitt (124) elektrisch zu isolieren, so dass eine elektrostatische Entladung (10), die über das Metall (220) des Verbinders (200) von dem Gehäuse (110) in den Verbindungsabschnitt (124) eingeleitet wird, nicht auf den Erdungsabschnitt (122) übertragen wird,
wobei die Leiterplatte (120) mindestens ein Funktionselement (126) beinhaltet und wobei das mindestens ein Funktionselement (126) mit dem Erdungsabschnitt (122) der Leiterplatte (120) verbunden ist,
wobei der Verbindungsabschnitt (124) einen Leistungseingangsanschluss (124-2) beinhaltet, der mit dem Verbinder (200) verbunden ist, um der Leiterplatte (120) Leistung zuzuführen, und,
wobei das Metall an einer Außenseite des Rahmens befestigt ist, um eine Form des Rahmens aufrechtzuerhalten, um eine Verformung des Verbinders zu verhindern.

7. Fahrzeugkameramodul (100, 100A) nach Anspruch 6, wobei das erste Kabel (300B) eine Länge von 10 cm oder 15 cm oder mehr hat.

8. Fahrzeugkameramodul (100, 100A) nach einem der Ansprüche 6 und 8, wobei der Verbinder (200, 200B) ein in dem Fahrzeugkameramodul (100, 100A) erzeugtes Umgebungsbild über ein zweites Kabel an eine elektronische Steuereinheit (ECU) überträgt, wobei die ECU in einem Fahrzeug (500) enthalten ist, um das Umgebungsbild des Fahrzeugs (500) zu analysieren.

9. Fahrzeugkameramodul (100, 100A) nach Anspruch 8, wobei das zweite Kabel eine Länge von 10 cm oder 15 cm oder mehr hat.

10. Fahrzeugbauteil, beinhaltend das Fahrzeugkameramodul (100, 100A), nach einem der Ansprüche 6 bis 9.

## Revendications

1. Module de caméra (100, 100A), comprenant :
un boîtier (110, 110A) ; et
une carte de circuit imprimé (120, 120A, 120B, 120C) logée dans le boîtier (110, 110A), la carte de circuit imprimé (120, 120A, 120B, 120C) pouvant être connectée à un connecteur (200, 200B) comportant un cadre (210) et un métal (220), le métal étant fixé à l'extérieur du cadre pour maintenir une forme du cadre de manière à empêcher la déformation du connecteur,
**caractérisé en ce que** la carte de circuit imprimé (120, 120A, 120B, 120C) comporte :
une partie masse (122) ;
une partie de connexion (124) située de manière à être électriquement isolée de la partie masse (122), la partie de connexion (124) pouvant être connectée au connecteur (200, 200B) et d'une forme apte à être connectée au connecteur (200, 200B) ; et
un élément électriquement isolant (128) disposé entre la partie masse (122) et la partie de connexion (124) pour isoler électriquement la partie masse (122) et la partie de connexion (124), de telle sorte qu'une décharge électrostatique (10), introduite dans la partie de connexion (124) par l'intermédiaire du métal (220) du connecteur (200) depuis le boîtier (110), n'est pas transmise à la partie masse (122),
la carte de circuit imprimé (120) comportant au moins un élément fonctionnel (126), et l'au moins un élément fonctionnel (126) étant connecté à la partie masse (122) de la carte de circuit imprimé (120),
la partie de connexion (124) comportant une borne d'entrée d'alimentation (124-2) connectée au connecteur (200) pour alimenter la carte de circuit imprimé (120), et la partie de connexion (124) comportant une borne d'entrée et de sortie de signal (124-1) connectée au connecteur (200) pour fournir un signal à la carte de circuit imprimé (120) ou pour recevoir un signal de la carte de circuit imprimé (120).

2. Module de caméra (100, 100A) selon la revendication 1, dans lequel le connecteur (200) comporte un matériau flexible.

3. Module de caméra (100, 100A) selon l'une quelconque des revendications 1 à 2, dans lequel la partie masse (122) et la partie de connexion sont déconnectées l'une de l'autre.

4. Module de caméra (100, 100A) selon la revendication 1, comprenant en outre un objectif (130, 130A),
l'au moins un élément fonctionnel (126) comportant :
un capteur d'image (126-1) configuré pour convertir une image optique provenant de l'objectif (130) en signal d'image électrique ; et/ou
un oscillateur (126-2) configuré pour générer un signal d'horloge requis pour le capteur d'image (126-1) ; et/ou
un amplificateur vidéo (126-3) configuré pour amplifier le signal d'image et émettre le signal d'image amplifié comme signal vidéo ; et/ou
un convertisseur (126-4) configuré pour convertir un niveau de puissance d'entrée en niveau de puissance requis pour la carte de circuit imprimé (120) ; et/ou
un dispositif de commande (126-5) configuré pour commander le capteur d'image (126-1) et/ou le convertisseur (126-4).

5. Module de caméra (100, 100A) selon la revendication 4, dans lequel la partie de connexion (124) reçoit la puissance d'entrée pour fournir au convertisseur (126-4) la puissance d'entrée reçue.

6. Module de caméra de véhicule (100, 100A), comprenant :
un boîtier (110, 110A) ; et
une carte de circuit imprimé (120, 120A, 120B, 120C) logée dans le boîtier (110, 110A), la carte de circuit imprimé (120, 120A, 120B, 120C) pouvant être connectée à un connecteur (200, 200B), le connecteur (200, 200B) comportant un cadre (210) et un métal et étant configuré pour être alimenté par un premier câble (300B) à partir d'une batterie (400A),
**caractérisé en ce que** la carte de circuit imprimé (120, 120A, 120B, 120C) comporte :
une partie masse (122) ; et
une partie de connexion (124) disposée de manière à être électriquement isolée de la partie masse (122), la partie de connexion (124) pouvant être connectée au connecteur (200, 200B) et d'une forme apte à être connectée au connecteur (200, 200B) ; et
un élément électriquement isolant (128) disposé entre la partie masse (122) et la partie de connexion (124) pour isoler électriquement la partie masse (122) et la partie de connexion (124), de telle sorte qu'une décharge électrostatique (10), introduite dans la partie de connexion (124) par l'intermédiaire du métal (220) du connecteur (200) depuis le boîtier (110), n'est pas transmise à la partie masse (122),
la carte de circuit imprimé (120) comportant au moins un élément fonctionnel (126), et l'au moins un élément fonctionnel (126) étant connecté à la partie masse (122) de la carte de circuit imprimé (120),
la partie de connexion (124) comportant une borne d'entrée d'alimentation (124-2) connectée au connecteur (200) destinée à alimenter la carte de circuit imprimé (120), et
le métal étant fixé à un extérieur du cadre pour maintenir une forme du cadre de manière à empêcher la déformation du connecteur.

7. Module de caméra de véhicule (100, 100A) selon la revendication 6, dans lequel le premier câble (300B) est long de 10 cm, 15 cm, ou plus.

8. Module de caméra de véhicule (100, 100A) selon l'une quelconque des revendications 6 et 8, dans lequel le connecteur (200, 200B) transmet une image environnante générée dans le module de caméra de véhicule (100, 100A), à une unité de commande électronique (ECU) par un second câble, l'ECU étant incluse dans un véhicule (500) pour analyser l'image environnante du véhicule (500).

9. Module de caméra de véhicule (100, 100A) selon la revendication 8, dans lequel le second câble est long de 10 cm, 15 cm, ou plus.

10. Composant de véhicule comportant le module de caméra de véhicule (100, 100A) selon l'une quelconque des revendications 6 à 9.
